(19) Europäisches Patentamt
European Patent Office
Office européen des brevets

(11) **EP 4 024 111 A1**

(12) **EUROPEAN PATENT APPLICATION**
published in accordance with Art. 153(4) EPC

(43) Date of publication:
**06.07.2022 Bulletin 2022/27**

(21) Application number: **20864975.6**

(22) Date of filing: **16.09.2020**

(51) International Patent Classification (IPC):
***G02B 13/00*** *(2006.01)*

(52) Cooperative Patent Classification (CPC):
**G02B 1/00; G02B 13/00; G02B 13/18**

(86) International application number:
**PCT/CN2020/115562**

(87) International publication number:
**WO 2021/052359 (25.03.2021 Gazette 2021/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.09.2019 CN 201910877855**

(71) Applicant: **Huawei Technologies Co., Ltd.
Longgang District
Shenzhen,
Guangdong 518129 (CN)**

(72) Inventors:
• **YE, Haishui
Shenzhen, Guangdong 518129 (CN)**
• **LU, Jianlong
Shenzhen, Guangdong 518129 (CN)**
• **JU, Yuandao
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **LENS GROUP, RELATED DEVICE AND RELATED SYSTEM**

(57)    A lens group includes a first lens (LI), a second lens (L2), a third lens (L3), a fourth lens (L4), and a fifth lens (L5) that are sequentially arranged from an object side to an image side, and a relative refractive index temperature coefficient β of at least one lens meets: $-9 \times 10^{-5} \leq \beta \leq 9 \times 10^{-5}$. A temperature drift coefficient of the lens group falls within a small range, a temperature effect of the lens group is low, and a defocus phenomenon generated because the lens group changes with a temperature is weak. This can reduce a design difficulty of a voice coil motor in a lens and improve user experience.

FIG. 2

## Description

This application claims priority to Chinese Patent Application No. 201910877855.5, filed with the China National Intellectual Property Administration on September 17, 2019 and entitled "LENS GROUP, RELATED DEVICE, AND RELATED SYSTEM", which is incorporated herein by reference in its entirety.

## TECHNICAL FIELD

This application relates to the field of lens technologies, and in particular, to a lens group, a related device, and a related system.

## BACKGROUND

A camera is a typical terminal device component. With continuous development of portable devices, camera applications are increasingly diversified. In a multi-camera combined zoom system, a design of a long-focus lens group is indispensable.

Generally, a structure design of four to six full-resin lenses is used for a long-focus lens group of a terminal device, and a focal length and a back focal length of the lens group change with a temperature. This is referred to as a temperature effect. As the focal length of the lens group increases, the temperature effect becomes more obvious. In an existing solution, the generated temperature effect is compensated through temperature compensation. Specifically, an ambient temperature of the lens group is monitored, and a stroke of a voice coil motor (voice coil motor, VCM) is calculated, to drive a lens to perform focus.

In the existing solution, to cope with a long-focus lens group with a larger focal length, the voice coil motor needs to have a larger stroke (stroke). This increases power consumption and a design difficulty of the voice coil motor. Therefore, a new lens group is required to reduce the temperature effect.

## SUMMARY

Embodiments of this application provide a lens group, a related device, and a related system, to reduce an overall temperature effect of the lens group, reduce a design difficulty of a voice coil motor in the lens group, and improve user experience.

To resolve the foregoing technical problem, the embodiments of this application provide the following technical solutions.

According to a first aspect, an embodiment of this application provides a lens group, including a first lens, a second lens, a third lens, a fourth lens, and a fifth lens that are sequentially arranged from an object side to an image side. A relative refractive index temperature coefficient $\beta$ of at least one lens meets: $-9\times10^{-5}\leq\beta\leq9\times10^{-5}$. A refractive index changes with a temperature. A change of the refractive index with the temperature is represented by using the relative refractive index temperature coefficient $\beta$.

In this embodiment of this application, the relative refractive index temperature coefficient $\beta$ of the at least one lens in the lens group meets: $-9\times10^{-5}\leq\beta\leq9\times10^{-5}$. Therefore, a temperature drift coefficient of the lens group falls within a small range, and a temperature effect of the lens group is low, that is, a defocus phenomenon generated because the lens group changes with the temperature is weak. This can reduce a design difficulty of a voice coil motor in the lens group and improve user experience.

In a possible implementation of the first aspect, the temperature drift coefficient of the lens group meets: $-2.6$ microns $\mu m/^\circ C\leq\Delta EFL/\Delta^\circ C\leq2.6\ \mu m/^\circ C$, an effective focal length of the lens group is EFL, and $\Delta EFL/\Delta^\circ C$ is the temperature drift coefficient. In this case, the temperature effect of the lens group is lower. The effective focal length EFL of the lens group and a total track length TTL of the lens group meet the following condition: $TTL/EFL\leq0.96$. This meets a miniaturization requirement of the lens group.

In a possible implementation of the first aspect, a material of at least one lens in the lens group may be glass.

In a possible implementation of the first aspect, a relative refractive index temperature coefficient $\beta3$ of the third lens in the lens group meets: $-9\times10^{-5}\leq\beta3\leq9\times10^{-5}$. A dispersion coefficient V3 of the third lens may meet: $15\leq V3\leq100$. In this case, the third lens may be used to correct chromatic aberration of the lens group. The lens group meets the following condition: $0.27\leq F3/EFL\leq0.9$, F3 is a focal length of the third lens, and EFL is the effective focal length of the lens group. In this way, focal length distribution in the lens group is more proper, and the miniaturization requirement of the lens group is met. The third lens may further be of a glass material.

In a possible implementation of the first aspect, the lens group meets the following condition: $SP3/LT\leq0.5$, a distance between the third lens and the fourth lens is SP3, and a distance between a vertex position of an object side of the first lens and a vertex position of an image side of the fifth lens is LT. In this way, an assembly difficulty of the lens group is reduced. Assembly is a process of assembling parts in sequence based on a design requirement.

In a possible implementation of the first aspect, the lens group meets the following condition: the first lens, the third lens, and the fourth lens in the lens group have positive focal power, and the second lens and the fifth lens in the lens group have negative focal power. In the lens group, a lens with a low refractive index temperature coefficient is used, and focal power is properly allocated, so that the temperature effect of the lens group can be lower.

In a possible implementation of the first aspect, object side surfaces of the first lens, the second lens, and the third lens are convex surfaces, and image side surfaces thereof are concave surfaces; an object side surface of the fourth lens is a concave surface, and an image side surface thereof is a convex surface; and an object side surface of the fifth lens is a concave surface, and an image side surface thereof is a concave surface. It should be noted that the convex surface and the concave surface are defined for each surface in a paraxial area, namely, defined for an area near an optical axis. The object side surface of the first lens is set as a convex surface, so that a capability to converge light on the object side is improved.

In a possible implementation of the first aspect, the lens group meets the following condition: $|EFL/R21|+|EFL/R22|=3.39$, the effective focal length of the lens group is EFL, a curvature radius of the object side surface of the second lens is R21, and a curvature radius of the image side surface of the second lens is R22. This helps correct aberration of an optical system in which the lens group is located. The lens group meets the following condition: $|EFL/R21|+|EFL/R22|=4.03$, the effective focal length of the lens group is EFL, a curvature radius of the object side surface of the second lens is R21, and a curvature radius of the image side surface of the second lens is R22. This helps correct aberration of an optical system in which the lens group is located.

In a possible implementation of the first aspect, the lens group meets the following condition: object side surfaces of the first lens and the second lens are convex surfaces, and image side surfaces thereof are concave surfaces; an object side surface of the third lens is a convex surface, and an image side surface thereof is a convex surface; an object side surface of the fourth lens is a concave surface, and an image side surface thereof is a convex surface; and an object side surface of the fifth lens is a concave surface, and an image side surface thereof is a concave surface. The object side surface of the first lens is set as a convex surface, so that a capability to converge light on the object side is improved. The first lens and the third lens have positive focal power, and the second lens, the fourth lens, and the fifth lens have negative focal power. In the lens group, a lens with a low refractive index temperature coefficient is used, and focal power is properly allocated, so that the temperature effect of the lens group can be lower.

In a possible implementation of the first aspect, the lens group meets the following condition: an object side surface of the first lens is a convex surface, and an image side surface thereof is a convex surface; object side surfaces of the second lens and the fourth lens are concave surfaces, and image side surfaces thereof are concave surfaces; and object side surfaces of the third lens and the fifth lens are concave surfaces, and image side surfaces thereof are convex surfaces. This improves a capability to converge light on the object side. The lens group meets the following condition: $|EFL/R21|+|EFL/R22|=2.22$, the effective focal length of the lens group is EFL, a curvature radius of the object side surface of the second lens is R21, and a curvature radius of the image side surface of the second lens is R22. This helps correct aberration of an optical system in which the lens group is located.

In a possible implementation of the first aspect, the lens group further includes an aperture stop and an infrared cut-off filter IRCF; and the aperture stop is disposed between the third lens and the fourth lens, and the infrared cut-off filter is disposed behind the image side of the fifth lens. This can reduce stray light and help improve imaging quality.

In a possible implementation of the first aspect, the lens group further includes a first vignetting stop, and the first vignetting stop is disposed in front of the object side of the first lens. The lens group further includes a second vignetting stop, and the second vignetting stop is disposed behind the image side of the fifth lens. This can reduce stray light and help improve imaging quality.

According to a second aspect, an embodiment of this application further provides an image capture optical system, including a lens group, a drive apparatus, a sensor, and an image stabilization module, where the lens group includes the lens group according to any one of the first aspect and the possible implementations of the first aspect.

According to a third aspect, an embodiment of this application further provides a terminal device, including an image capture optical system, a flash module, a focus assistance module, an image signal processor, a user interface, and an image software processor, where the image capture optical system includes the image capture optical system according to the second aspect, the image capture optical system includes a lens group, and the lens group includes the lens group according to any one of the first aspect and the possible implementations of the first aspect.

It can be learned from the foregoing technical solutions that the embodiments of this application have the following advantages:

The lens group includes the first lens, the second lens, the third lens, the fourth lens, and the fifth lens that are sequentially arranged from the object side to the image side, and the relative refractive index temperature coefficient β of the at least one lens meets: $-9\times10^{-5}\leq\beta\leq9\times10^{-5}$. Therefore, an overall temperature effect of the lens group including the lenses is low. In addition, this reduces the design difficulty of the voice coil motor and improves user experience.

## BRIEF DESCRIPTION OF DRAWINGS

FIG. 1 is a schematic diagram of a structure of a lens group according to an embodiment of this application;
FIG. 2 is a schematic diagram of a structure of another lens group according to an embodiment of this application;
FIG. 3a is a schematic diagram of a chromatic aberration curve of a lens group according to an embodiment of this application;
FIG. 3b is a schematic diagram of an astigmatism curve of a lens group according to an embodiment of this application;
FIG. 3c is a schematic diagram of a distortion curve of a lens group according to an embodiment of this application;
FIG. 4 is a schematic diagram of a structure of another lens group according to an embodiment of this application;
FIG. 5a is a schematic diagram of a chromatic aberration curve of another lens group according to an embodiment of this application;
FIG. 5b is a schematic diagram of an astigmatism curve of another lens group according to an embodiment of this application;
FIG. 5c is a schematic diagram of a distortion curve of another lens group according to an embodiment of this application;
FIG. 6 is a schematic diagram of a structure of another lens group according to an embodiment of this application;
FIG. 7a is a schematic diagram of a chromatic aberration curve of another lens group according to an embodiment of this application;
FIG. 7b is a schematic diagram of an astigmatism curve of another lens group according to an embodiment of this application;
FIG. 7c is a schematic diagram of a distortion curve of another lens group according to an embodiment of this application;
FIG. 8 is a schematic diagram of a structure of another lens group according to an embodiment of this application;
FIG. 9a is a schematic diagram of a chromatic aberration curve of another lens group according to an embodiment of this application;
FIG. 9b is a schematic diagram of an astigmatism curve of another lens group according to an embodiment of this application;
FIG. 9c is a schematic diagram of a distortion curve of another lens group according to an embodiment of this application;
FIG. 10 is a schematic diagram of a structure of an image capture optical system according to an embodiment of this application;
FIG. 11 is a schematic diagram of a terminal device according to an embodiment of this application; and
FIG. 12 is a schematic diagram of another terminal device according to an embodiment of this application.

## DESCRIPTION OF EMBODIMENTS

To facilitate understanding of the embodiments of this application, several concepts that may occur in this application are first described. It should be understood that the following concept explanations may be limited due to a specific case in this application, but it does not indicate that this application is limited to the specific case. The following concept explanations may also vary with a specific case in different embodiments.

A lens group is a component that forms a clear image of scene light on an image plane (focusing plane) by using a lens and/or a reflector.

Focal power is equal to a difference between convergence of a light beam on an image side and convergence of a light beam on an object side, and represents a capability of an optical system to refract light.

For a curvature radius, a curvature is a value used to represent a curve degree of a curve at a point. A larger curvature indicates a larger curve degree of the curve, and a reciprocal of the curvature is the curvature radius.

For an aperture stop, a stop with a smallest incident beam angle is referred to as the aperture stop.

For a vignetting stop, a phenomenon in which an off-axis light beam is intercepted is referred to as vignetting. A stop in which vignetting occurs is referred to as a vignetting stop, namely, a stop that blocks the off-axis light beam.

For an object side surface, a surface on a lens that is closest to a real object is the object side surface.

For an image side surface, a surface on a lens that is closest to an image plane is the image side surface.

An effective focal length (effective focal length, EFL) is a distance from a main plane of the optical system to a corresponding focal point.

A total track length (total track length, TTL) falls into a total optical length and a total mechanism length. The total optical length is a distance from an object side surface of a first lens to the image plane. The total mechanism length is a distance from an end face of a lens barrel of the lens group to the image plane. In the embodiments of this application, the total track length is a distance, on an optical axis, from the object side surface of the first lens to the image plane.

For a refractive index, if light enters a non-absorbent homogeneous material, the light is reflected and refracted by an interface of the material. The refractive index n is equal to a ratio of a speed c of light in vacuum to a speed v of the light in a medium. In practice, the refractive index is measured by measuring a refraction angle generated because a light beam is refracted by an interface, and a formula describing refraction is referred to as the Snell's (Snell) law.

Dispersion is a change of the refractive index with a wavelength. A dispersion phenomenon may be explained by using an electromagnetic theory: When an electromagnetic wave acts on an atom or a molecule, a bound charge vibrates at a frequency of an incident wave. The bound charge has a corresponding resonance frequency for a specified wavelength.

A dispersion coefficient is an important indicator to measure imaging quality of a lens, and is usually represented by using the Abbe number. Therefore, the dispersion coefficient is also referred to as the Abbe number. A larger dispersion coefficient (Abbe number) indicates less obvious dispersion and better imaging quality of the lens. A smaller dispersion coefficient (Abbe number) indicates more obvious dispersion and worse imaging quality of the lens.

For a relative refractive index temperature coefficient ($\beta$), the refractive index changes with a temperature, and a change of the refractive index with the temperature is represented by using the relative refractive index temperature coefficient $\beta$. Specifically, $\beta=dn/dt$. A refractive index temperature coefficient may be represented by using a relative refractive index temperature coefficient $(dn/dt)_{rel}$. in dry air (101.3 kilopascals), or may be represented by using an absolute refractive index temperature coefficient $(dn/dt)_{abs}$. in vacuum.

A temperature drift coefficient is a rate at which the effective focal length of the lens group changes with the temperature.

To make persons skilled in the art understand the technical solutions in this application better, the following describes the embodiments of this application with reference to the accompanying drawings in the embodiments of this application.

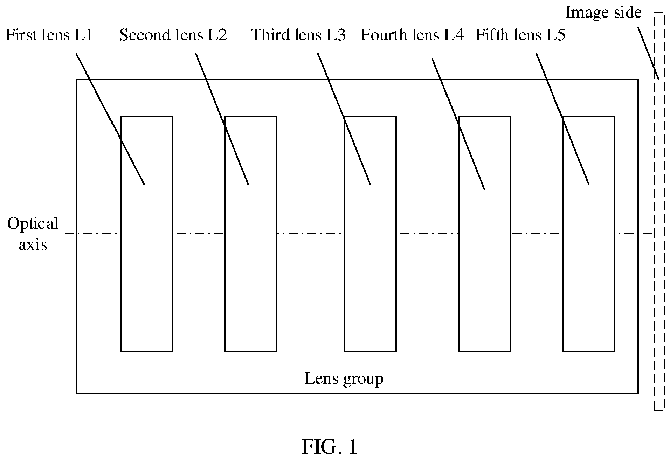

FIG. 1 is a schematic diagram of a structure of a lens group according to an embodiment of this application. This embodiment of this application provides a lens group. The lens group includes a first lens L1, a second lens L2, a third lens L3, a fourth lens L4, and a fifth lens L5 that are sequentially arranged from an object side to an image side. A relative refractive index temperature coefficient $\beta$ of at least one lens meets: $-9\times10^{-5}\leq\beta\leq9\times10^{-5}$.

According to the lens group provided in this embodiment of this application, because the relative refractive index temperature coefficient $\beta$ of the at least one lens meets: $-9\times10^{-5}\leq\beta\leq9\times10^{-5}$, a refractive index of the lens is not sensitive to a temperature change.

In an existing solution, when a temperature changes, an image capture optical system in which the lens group is used drives, by using a voice coil motor, a lens to perform focus, to compensate for a lack of definition of an image caused because the temperature changes. If a temperature effect of the lens group is stronger, the voice coil motor needs to have a larger linear stroke (stroke). This also increases power consumption, a size, and a design difficulty of the voice coil motor. In this way, according to the lens group proposed in this embodiment of this application, the relative refractive index temperature coefficient $\beta$ of the at least one lens in the lens group meets: $-9\times10^{-5}<\beta<9\times10^{-5}$. Therefore, a temperature drift coefficient of the lens group falls within a small range, and the temperature effect of the lens group is low, that is, a defocus phenomenon generated because the lens group changes with the temperature is weak. This can reduce the design difficulty of the voice coil motor in a lens and improve user experience.

On the basis of the embodiment corresponding to FIG. 1, to further improve the temperature effect of the lens group, that is, to enable the temperature effect of the lens group to be lower, the temperature drift coefficient of the lens group may meet: -2.6 microns $\mu m/°C\leq\Delta EFL/\Delta°C\leq2.6$ $\mu m/°C$, an effective focal length of the lens group is EFL, and $\Delta EFL/\Delta°C$ is the temperature drift coefficient.

On the basis of the embodiment corresponding to FIG. 1, to meet a miniaturization requirement of the lens group, the effective focal length EFL of the lens group and a total track length TTL of the lens group may meet the following condition: $TTL/EFL\leq0.96$.

On the basis of the foregoing embodiment, in the lens group proposed in this embodiment of this application, a relative refractive index temperature coefficient $\beta3$ of the third lens L3 may specifically meet: $-9\times10^{-5}\leq\beta3\leq9\times10^{-5}$. In addition, to enable focal length distribution in the lens group to be more proper and meet the miniaturization requirement of the lens group, a focal length F3 of the third lens L3 and the effective focal length EFL of the lens group meet the following condition: $0.27\leq F3/EFL\leq0.9$. Because a range in which a refractive index of the third lens L3 changes with the temperature small, the temperature effect of the lens group is low. It should be noted that, in an optional implementation, a focal length of any lens whose relative refractive index temperature coefficient meets $[-9\times10^{-5}, 9\times10^{-5}]$ may meet the foregoing condition. For example, a relative refractive index temperature coefficient $\beta4$ of the fourth lens L4 meets $[-9\times10^{-5}, 9\times10^{-5}]$, and a focal length F4 of the fourth lens L4 meets $0.27\leq F4/EFL\leq0.9$. This is not limited herein.

Optionally, in the lens group proposed in this embodiment of this application, a material of one or more lenses in the lens group includes glass. A relative refractive index temperature coefficient of a lens for which a glass material is used meets $[-9\times10^{-5}, 9\times10^{-5}]$. It should be noted that, "a relative refractive index temperature coefficient of a lens

meets [-9×10$^{-5}$, 9×10$^{-5}$]" proposed in this embodiment of this application is merely an example for description, and is intended to indicate that the relative refractive index temperature coefficient of the lens is small.

On the basis of the foregoing embodiment, to correct chromatic aberration of the lens group, a dispersion coefficient V3 of the third lens L3 may meet: 15≤V3≤100. It should be noted that, in an optional implementation, a dispersion coefficient of one or more other lenses may meet the foregoing condition. This is not limited herein.

On the basis of the foregoing embodiment, assembly is a process of assembling parts in sequence based on a design requirement. To reduce an assembly difficulty of the lens group, a distance between the third lens L3 and the fourth lens L4 is SP3, and a distance between a vertex position of an object side of the first lens L1 and a vertex position of an image side of the fifth lens L5 is LT, so that the lens group can meet: SP3/LT≤0.5. The vertex position of the object side of the first lens L1 is a position at which an object side surface of the first lens L1 intersects with an optical axis (or an axis of symmetry). The vertex position of the image side of the fifth lens L5 is a position at which an image side surface of the fifth lens L5 intersects with the optical axis (or the axis of symmetry).

Focal power is used to represent a capability of an optical system to refract incident light. When the focal power has a positive value, it indicates that an incident parallel light beam parallel to the optical axis is converged through refraction by the optical system. When the focal power has a negative value, it indicates that an incident parallel light beam parallel to the optical axis is diverged through refraction by the optical system. In an optional implementation, the first lens L1, the third lens L3, and the fourth lens L4 in the lens group have positive focal power, and the second lens L2 and the fifth lens L5 in the lens group have negative focal power. In the lens group, a lens with a low refractive index temperature coefficient is used, and focal power is properly allocated, so that the temperature effect of the lens group can be lower.

On the basis of the foregoing embodiment, object side surfaces of the first lens L1, the second lens L2, and the third lens L3 are convex surfaces, and image side surfaces thereof are concave surfaces; an object side surface of the fourth lens L4 is a concave surface, and an image side surface thereof is a convex surface; and an object side surface of the fifth lens L5 is a concave surface, and an image side surface thereof is a concave surface. It should be noted that the convex surface and the concave surface are defined for each surface in a paraxial area, namely, defined for an area near the optical axis. The object side surface of the first lens L1 is set as a convex surface, so that a capability to converge light on the object side is improved.

On the basis of the foregoing embodiment, object side surfaces of the first lens L1 and the second lens L2 are convex surfaces, and image side surfaces thereof are concave surfaces; an object side surface of the third lens L3 is a convex surface, and an image side surface thereof is a convex surface; an object side surface of the fourth lens L4 is a concave surface, and an image side surface thereof is a convex surface; and an object side surface of the fifth lens L5 is a concave surface, and an image side surface thereof is a concave surface. The object side surface of the first lens L1 is set as a convex surface, so that a capability to converge light on the object side is improved.

In an optional implementation, the first lens L1 and the third lens L3 in the lens group have positive focal power, and the second lens L2, the fourth lens L4, and the fifth lens L5 have negative focal power. In the lens group, a lens with a low refractive index temperature coefficient is used, and focal power is properly allocated, so that the temperature effect of the lens group can be lower.

On the basis of the foregoing embodiment, an object side surface of the first lens L1 is a convex surface, and an image side surface thereof is a convex surface; object side surfaces of the second lens L2 and the fourth lens L4 are concave surfaces, and image side surfaces thereof are concave surfaces; and object side surfaces of the third lens L3 and the fifth lens L5 are concave surfaces, and image side surfaces thereof are convex surfaces.

On the basis of the foregoing embodiment, the lens group proposed in this embodiment of this application may further include a vignetting stop (vignetting stop), an aperture stop (aperture stop, STO), and an infrared cut-off filter (ir-cut filter, IRCF). The vignetting stop is used to improve imaging quality of an off-axis point and reduce a size of an optical part. The aperture stop is used to improve imaging quality of the lens group. The infrared cut-off filter is used to filter infrared light in natural light, so that an image collected by an image sensor subsequently connected to the lens group approximates to an image viewed by the human eye.

Optionally, the lens group includes a first vignetting stop ST1, a second vignetting stop ST2, an aperture stop STO, and an infrared cut-off filter IRCF. The first vignetting stop ST1 is disposed in front of the object side of the first lens L1. The second vignetting stop is disposed behind the image side of the fifth lens L5. The aperture stop STO may be disposed between the third lens L3 and the fourth lens L4. The infrared cut-off filter IRCF may be disposed behind the image side of the fifth lens L5. The first vignetting stop ST1 is disposed in front of the object side of the first lens L1, and the second vignetting stop ST2 is disposed behind the image side of the fifth lens L5, so that an outer diameter of the lens group can be reduced.

Optionally, the lens group includes an aperture stop STO and an infrared cut-off filter IRCF. The aperture stop STO may be disposed in front of the object side of the first lens L1. The infrared cut-off filter IRCF is disposed behind the image side of the fifth lens L5.

Optionally, one or more other stops may be disposed between the lenses in the lens group. A type of the another stop is, for example, a glare stop (glare stop) or a field stop (field stop). This can reduce stray light and help improve imaging quality.

On the basis of the foregoing embodiment, the lens group proposed in this embodiment of this application meets the following condition: |EFL/R21|+|EFL/R22|<6, the effective focal length of the lens group is EFL, a curvature radius of the object side surface of the second lens is R21, and a curvature radius of the image side surface of the second lens is R22. This helps correct integrated aberration of the lens group.

Optionally, in the lens group proposed in this embodiment of this application, a material of another lens may be resin or glass. When a material of a lens is glass, a degree of freedom of refractive index configuration may be increased. When a material of a lens is resin, production costs may be effectively reduced. In addition, an aspherical surface (ASP) may be disposed on a surface of a lens. The aspherical surface may be easily produced into a shape other than a spherical surface, to obtain a large quantity of control variables to reduce aberration, so that a total optical length can be effectively reduced.

Specifically, an aspherical surface curve equation of each lens is represented as follows:

$$z = \frac{cr^2}{1+\sqrt{1-(1+k)c^2r^2}} + \sum_{i=1}^{N} A_i r^{2i} \, ,$$

where

z is a vertical distance between a point, that is on an aspherical surface curve and whose distance to the optical axis is r, and a tangent plane that is tangent to a vertex on an aspherical surface optical axis;
r is a vertical distance between a point on an aspherical curve and the optical axis;
c is a curvature of an aspherical surface at an optical center (namely, a point at which the lens intersects with the optical axis);
k is a conic coefficient; and
Ai is an ith order of aspherical surface coefficient.

The following enumerates specific embodiments of several lens groups with reference to the accompanying drawings. It should be noted that, in the following embodiments, a surface type parameter of an aspherical surface of each lens meets the foregoing equation. A shape of a spherical surface or an aspherical surface shown in the accompanying drawings is merely an example for representation, that is, the shape of the spherical surface or the aspherical surface is not limited to the shape shown in the accompanying drawings.

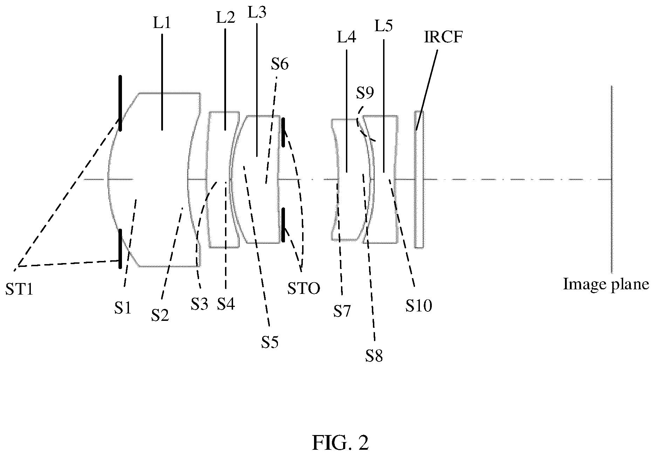

FIG. 2 is a schematic diagram of a structure of another lens group according to an embodiment of this application. As shown in FIG. 2, the lens group includes a first vignetting stop ST1, a first lens L1, a second lens L2, a third lens L3, an aperture stop STO, a fourth lens L4, a fifth lens L5, and an infrared cut-off filter IRCF that are sequentially arranged along an optical axis from an object side to an image side, and an electronic photosensitive element may be placed behind an image side of the fifth lens.

The first lens L1 has positive focal power, and is of a resin (plastic) material. An object side surface S1 thereof near the optical axis is a convex surface, an image side surface S2 thereof near the optical axis is a concave surface, and both surfaces are aspherical surfaces.

The second lens L2 has negative focal power, and is of a resin material. An object side surface S3 thereof near the optical axis is a convex surface, an image side surface S4 thereof near the optical axis is a concave surface, and both surfaces are aspherical surfaces.

The third lens L3 has positive focal power, and is of a glass (glass) material. An object side surface S5 thereof near the optical axis is a convex surface, an image side surface S6 thereof near the optical axis is a concave surface, and both surfaces aspherical surfaces. A relative refractive index temperature coefficient thereof meets [$-9\times10^{-5}$,$9\times10^{-5}$].

The fourth lens L4 has positive focal power, and is of a resin material. An object side surface S7 thereof near the optical axis is a concave surface, an image side surface S8 thereof near the optical axis is a convex surface, and both surfaces are aspherical surfaces.

The fifth lens L5 has negative focal power, and is of a resin material. An object side surface S13 thereof near the optical axis is a concave surface, an image side surface S14 thereof near the optical axis is a concave surface, and both surfaces are aspherical surfaces.

A diameter of the lens group can be effectively reduced by disposing the first vignetting stop ST1.

In an optional implementation, a second vignetting stop ST2 may be disposed behind the image side of the fifth lens L5, to further reduce the diameter of the lens group.

Table 1 provides specific parameters of each lens, and Table 2 provides a conic coefficient k and an aspherical surface coefficient Ai (i=4, 6, 8, 10, 12, 14, 16, 18, and 20) of a surface of each lens.

**Table 1**

| Surface number | Description | Surface type | Curvature radius | Thickness | Material | Refractive index | Dispersion coefficient |
|---|---|---|---|---|---|---|---|
| OBJ | | Planar surface | Infinite | Infinite | | | |
| ST1 | Vignetting stop | Aspherical surface | Infinite | -0.630 | | | |
| S1 | First lens | Aspherical surface | 3.544265 | 2.100 | PLASTIC | 1.544 | 56 |
| S2 | | Aspherical surface | 5.303853 | 0.499 | | | |
| S3 | Second lens | Aspherical surface | 22.832517 | 0.605 | PLASTIC | 1.66 | 20.4 |
| S4 | | Aspherical surface | 5.250308 | 0.061 | | | |
| S5 | Third lens | Aspherical surface | 3.841818 | 1.235 | GLASS | 1.59 | 61.1 |
| S6 | | Aspherical surface | 21.739040 | 0.108 | | | |
| STO | Aperture stop | Planar surface | Infinite | 1.474 | | | |
| S7 | Fourth lens | Aspherical surface | -10.600979 | 0.844 | PLASTIC | 1.66 | 20.4 |
| S8 | | Aspherical surface | -5.425353 | 0.097 | | | |
| S9 | Fifth lens | Aspherical surface | -21.556688 | 0.552 | PLASTIC | 1.544 | 56 |
| S10 | | Aspherical surface | 5.215691 | 0.546 | | | |
| S11 | Infrared cut-off filter | Planar surface | | 0.210 | - | 1.52 | 64.2 |
| S12 | | Planar surface | Infinite | 5.000 | | | |
| S13 | | Planar surface | Infinite | | | | |

**Table 2**

| Surface number | K | A4 | A6 | A8 | A10 |
|---|---|---|---|---|---|
| S1 | -3.215481E-01 | 2.895353E-04 | -6.909356E-05 | 4.138766E-05 | -5.649577E-06 |
| S2 | -1.719644E+01 | 1.836939E-02 | -6.814441E-03 | 2.608738E-03 | -5.941714E-04 |
| S3 | -9.995137E+01 | 1.523238E-02 | -1.098671E-02 | 4.444331E-03 | -8.875001E-04 |
| S4 | -3.725193E-01 | 2.131936E-02 | -1.930895E-02 | 9.750389E-03 | -2.639676E-03 |
| S5 | -7.837987E-01 | 9.155998E-03 | -9.240931E-03 | 5.974139E-03 | -1.668957E-03 |

(continued)

| Surface number | K | A4 | A6 | A8 | A10 |
|---|---|---|---|---|---|
| S6 | -9.995744E+01 | -1.776566E-03 | 9.751260E-04 | -2.049232E-04 | 1.997927E-05 |
| S7 | 4.159199E+01 | 4.650471E-03 | -1.092824E-02 | 3.834902E-03 | -2.522905E-03 |
| S8 | 8.861831E+00 | -1.120116E-02 | 1.212470E-02 | -8.657211E-03 | 2.429772E-03 |
| S9 | 2.306174E+01 | -9.379813E-02 | 5.091768E-02 | -1.985275E-02 | 4.731056E-03 |
| S10 | -3.969773E+01 | -3.705374E-02 | 1.684387E-02 | -4.611302E-03 | 1.038328E-03 |

| Surface number | A12 | A14 | A16 | A18 | A20 |
|---|---|---|---|---|---|
| S1 | 4.455451E-07 | | | | |
| S2 | 7.478346E-05 | -2.857577E-06 | | | |
| S3 | -4.050615E-06 | 3.291302E-05 | -3.905022E-06 | | |
| S4 | 3.116471E-04 | -9.467725E-06 | | | |
| S5 | 2.000136E-04 | -7.276293E-06 | | | |
| S6 | -7.583074E-07 | | | | |
| S7 | 5.273132E-04 | | | | |
| S8 | -1.124679E-04 | | | | |
| S9 | -1.887855E-04 | -7.997758E-05 | | | |
| S10 | -1.901802E-04 | 1.621097E-05 | | | |

**Table 3**

| Parameter (mm) | TTL | ImgH | EFL | F1 | F2 | F3 | F4 | F5 |
|---|---|---|---|---|---|---|---|---|
| Value | 12.7 | 2.5 | 14.45 | 13.75 | -10.36 | 7.7 | -26.49 | 15.79 |

In Table 3, a maximum image height of the lens group is ImgH, a focal length of the first lens L1 is F1, a focal length of the second lens L2 is F2, a focal length of the third lens L3 is F3, a focal length of the fourth lens L4 is F4, and a focal length of the fifth lens L5 is F5.

In this embodiment, the focal length of the third lens L3 is F3, a focal length of the lens group is EFL, and F3/EFL=0.53 meets 0.27≤F3/EFL≤0.9. When a temperature change is Δ°C, a change of EFL is ΔEFL, where ΔEFL/Δ°C is defined as a temperature drift coefficient of the lens group, and the temperature drift coefficient meets the following condition: -1 μm/°C≤ΔEFL/Δ°C≤1 μm/°C. A temperature drift coefficient of an image capture optical system in which the lens group is used is reduced by using a material with a low refractive index temperature coefficient and by properly allocating focal power.

In this embodiment, the focal length EFL of the lens group, a curvature radius R21 of the object side surface of the second lens, and a curvature radius R22 of the image side surface of the second lens meet the following condition: |EFL/R21|+|EFL/R22|=3.39. This helps correct system aberration.

Table 1, Table 2, and Table 3 provide detailed structure data of the lens group in the embodiment corresponding to FIG. 2. Units of the curvature radius, the thickness, and the focal length are millimeters (mm), and the surfaces ST1 to S13 sequentially represent surfaces of all optical elements from the object side to the image side. Table 2 provides aspherical surface data of each lens in the embodiment corresponding to FIG. 2, where k is a conic coefficient in an aspherical surface curve equation, and A4 to A20 represent fourth to twentieth orders of aspherical surface coefficients of each surface. Table 3 provides all parameters of the lens group in the embodiment corresponding to FIG. 2. In addition, tables in the following embodiments correspond to schematic diagrams and aberration curve diagrams in the embodiments, and definition of data in the tables are the same as definition of that in Table 1, Table 2, and Table 3 in the embodiment corresponding to FIG. 2. Details are not described herein again.

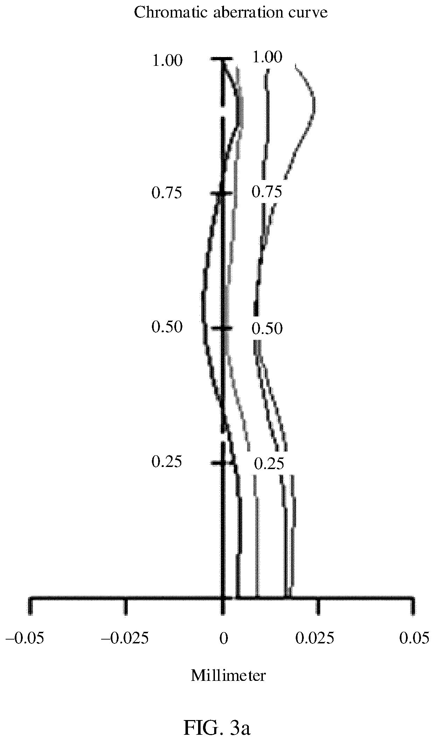

FIG. 3a shows a chromatic aberration curve of the lens group corresponding to FIG. 2. In FIG. 3a, a horizontal coordinate is a point at which light incident at different angles from a same object point intersects with the optical axis, and a vertical coordinate is a normalized height of incident light at an entrance pupil. In FIG. 3a, curves correspond to different wavelengths, such as 470 nanometers, 510 nanometers, 555 nanometers, 610 nanometers, and 650 nanometers. It may be learned from FIG. 3a that chromatic aberration is controlled within a small range ($\pm$0.025 millimeters). This may prove that the lens group proposed in this application has good chromatic aberration performance. It should be noted that the normalized height is a dimensionless ratio obtained after normalization processing is performed on a height of all incident light at the entrance pupil. In other words, it is assumed that a maximum height value is 1, and another height value is represented by using a ratio relationship between the height value and the maximum value. Normalization is a simplified calculation manner. To be specific, a dimensional expression is transformed into a dimensionless expression to become a scalar.

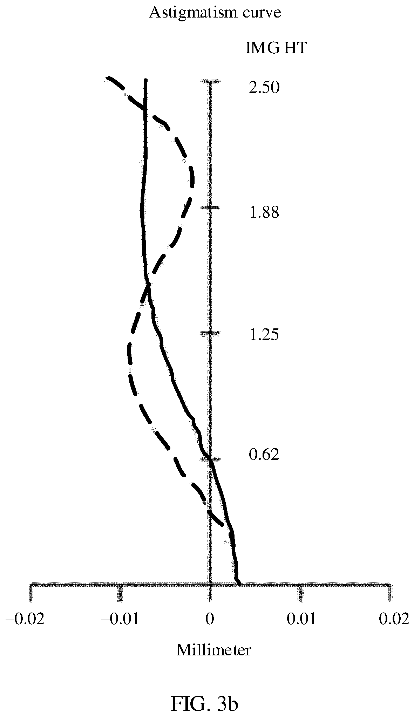

FIG. 3b shows an astigmatism/field curvature curve of the lens group corresponding to FIG. 2. In FIG. 3b, a horizontal coordinate is in a unit of millimeter, and a vertical coordinate is an image height (field of view). In FIG. 3b, a solid-line curve corresponds to an astigmatism/field curvature curve of the lens group in an S direction at a wavelength of 555 nanometers, and a dashed-line curve corresponds to an astigmatism/field curvature curve of the lens group in a T direction at a wavelength of 555 nanometers. It may be learned from FIG. 3b that astigmatism is controlled within a small range ($\pm$0.01 millimeters). This may prove that the lens group proposed in this application has good astigmatism performance.

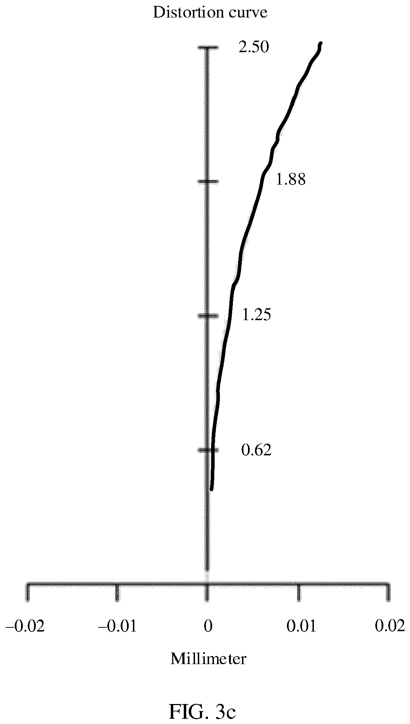

FIG. 3c shows a distortion curve of the lens group corresponding to FIG. 2. In FIG. 3c, a horizontal coordinate represents distortion (which may be a ratio of an actual image height on an image plane to an ideal image height, and is a percentage), and a vertical coordinate represents an image height. It may be learned from FIG. 3c that optical distortion is controlled within a range of 0 to 1%. The lens group corresponding to FIG. 2 has good anti-distortion performance.

It may be learned from FIG. 3a to FIG. 3c that, chromatic aberration performance, astigmatism performance, and anti-distortion performance of the lens group corresponding to FIG. 2 meet an imaging requirement, so that good imaging quality can be ensured.

In this embodiment of this application, the lens group includes the vignetting stop ST1, the first lens L1, the second lens L2, the third lens L3, the aperture stop STO, the fourth lens L4, the fifth lens L5, and the infrared cut-off filter IRCF that are sequentially arranged along the optical axis from the object side to the image side, and the electronic photosensitive element may be placed behind the image side of the fifth lens. The third lens L3 is of the glass material, and the relative refractive index temperature coefficient thereof meets [-9$\times$10$^{-5}$, 9$\times$10$^{-5}$]. In this way, the lens group has a low temperature effect. In addition, chromatic aberration performance, astigmatism performance, and anti-distortion performance of the lens group meet the imaging requirement, so that good imaging quality can be ensured.

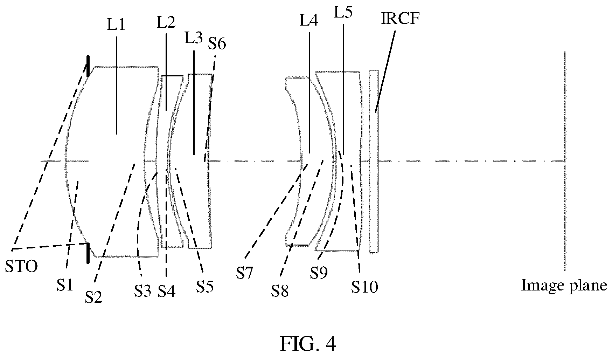

FIG. 4 is a schematic diagram of a structure of another lens group according to an embodiment of this application. As shown in FIG. 4, the lens group includes an aperture stop STO, a first lens L1, a second lens L2, a third lens L3, a fourth lens L4, a fifth lens L5, and an infrared cut-off filter IRCF that are sequentially arranged along an optical axis from an object side to an image side, and an electronic photosensitive element may be placed on an image plane.

The first lens L1 has positive focal power, and is of a resin material. An object side surface S1 thereof near the optical axis is a convex surface, an image side surface S2 thereof near the optical axis is a concave surface, and both surfaces are aspherical surfaces.

The second lens L2 has negative focal power, and is of a resin material. An object side surface S3 thereof near the optical axis is a convex surface, an image side surface S4 thereof near the optical axis is a concave surface, and both surfaces are aspherical surfaces.

The third lens L3 has positive focal power, and is of a glass material. An object side surface S5 thereof near the optical axis is a convex surface, an image side surface S6 thereof near the optical axis is a concave surface, and both surfaces aspherical surfaces. A relative refractive index temperature coefficient thereof meets [-9$\times$10$^{-5}$, 9$\times$10$^{-5}$].

The fourth lens L4 has positive focal power, and is of a resin material. An object side surface S7 thereof near the optical axis is a concave surface, an image side surface S8 thereof near the optical axis is a convex surface, and both surfaces are aspherical surfaces.

The fifth lens L5 has negative focal power, and is of a resin material. An object side surface S13 thereof near the optical axis is a concave surface, an image side surface S14 thereof near the optical axis is a concave surface, and both surfaces are aspherical surfaces.

Table 4 provides specific parameters of each lens, and Table 5 provides a conic coefficient k and an aspherical surface coefficient Ai (i=4, 6, 8, 10, 12, 14, 16, 18, and 20) of a surface of each lens.

**Table 4**

| Surface number | Description | Surface type | Curvature radius | Thickness | Material | Refractive index | Dispersion coefficient |
|---|---|---|---|---|---|---|---|
| OBJ | | Planar surface | Infinite | Infinite | | | |

(continued)

| Surface number | Description | Surface type | Curvature radius | Thickness | Material | Refractive index | Dispersion coefficient |
|---|---|---|---|---|---|---|---|
| STO | Aperture stop | Aspherical surface | Infinite | -0.614 | | | |
| S1 | First lens | Aspherical surface | 3.714372 | 2.100 | PLASTIC | 1.544 | 56 |
| S2 | | Aspherical surface | 5.037291 | 0.314 | | | |
| S3 | Second lens | Aspherical surface | 13.060914 | 0.300 | PLASTIC | 1.66 | 20.4 |
| S4 | | Aspherical surface | 4.951297 | 0.060 | | | |
| S5 | Third lens | Aspherical surface | 3.947529 | 1.040 | GLASS | 1.59 | 61.1 |
| S6 | | Aspherical surface | 29.902169 | 2.464 | | | |
| S7 | Fourth lens | Aspherical surface | -5.989465 | 0.850 | PLASTIC | 1.66 | 20.4 |
| S8 | | Aspherical surface | -4.172607 | 0.080 | | | |
| S9 | Fifth lens | Aspherical surface | -16.963651 | 0.650 | PLASTIC | 1.544 | 56 |
| S10 | | Aspherical surface | 6.103952 | 0.246 | | | |
| S11 | Infrared cut-off filter | Planar surface | | 0.210 | - | 1.52 | 64.2 |
| S12 | | Planar surface | Infinite | 5.000 | | | |
| S13 | | Planar surface | Infinite | | | | |

**Table 5**

| Surface number | K | A4 | A6 | A8 | A10 |
|---|---|---|---|---|---|
| S1 | -3.12084E-01 | 5.52218E-05 | -9.92683E-05 | 4.78175E-05 | -8.64741E-06 |
| S2 | -1.85786E+01 | 2.20877E-02 | -1.01583E-02 | 4.11673E-03 | -9.31877E-04 |
| S3 | -2.62577E+01 | 1.89738E-02 | -1.72928E-02 | 9.13426E-03 | -2.58841E-03 |
| S4 | -5.85775E-01 | 2.13164E-02 | -2.30550E-02 | 1.35283E-02 | -4.16042E-03 |
| S5 | -1.36169E+00 | 8.23904E-03 | -8.81881E-03 | 5.65384E-03 | -1.65213E-03 |
| S6 | -9.99900E+01 | -3.93244E-06 | 2.44829E-04 | -2.37704E-04 | 7.51153E-05 |
| S7 | 6.19810E+00 | 1.15453E-02 | -8.16920E-03 | 2.03553E-03 | -7.80287E-04 |
| S8 | 1.91849E+00 | 5.47846E-03 | -2.46854E-03 | -2.82789E-05 | 5.84776E-05 |
| S9 | -9.99900E+01 | -6.68782E-02 | 1.98477E-02 | -5.14875E-03 | 1.41559E-03 |
| S10 | -3.94752E+01 | -3.65793E-02 | 1.21638E-02 | -2.92545E-03 | 5.91877E-04 |

(continued)

| Surface number | A12 | A14 | A16 | A18 | A20 |
|---|---|---|---|---|---|
| S1 | 6.58646E-07 | | | | |
| S2 | 9.76697E-05 | -3.23644E-06 | | | |
| S3 | 3.37117E-04 | -1.05407E-05 | -1.11719E-06 | | |
| S4 | 6.10474E-04 | -3.53700E-05 | | | |
| S5 | 2.15010E-04 | -1.03181E-05 | | | |
| S6 | -7.74252E-06 | | | | |
| S7 | 1.01626E-04 | | | | |
| S8 | 2.93456E-06 | | | | |
| S9 | -2.51896E-04 | 1.90191E-05 | | | |
| S10 | -8.78975E-05 | 6.08165E-06 | | | |

**Table 6**

| Parameter (mm) | TTL | ImgH | EFL | F1 | F2 | F3 | F4 | F5 |
|---|---|---|---|---|---|---|---|---|
| Value | 12.7 | 2.5 | 14.46 | 16.6 | -12.1 | 7.6 | 17.4 | -8.1 |

In Table 6, a maximum image height of the lens group is ImgH, a focal length of the first lens L1 is F1, a focal length of the second lens L2 is F2, a focal length of the third lens L3 is F3, a focal length of the fourth lens L4 is F4, and a focal length of the fifth lens L5 is F5.

In this embodiment, the focal length of the third lens L3 is F3, a focal length of the lens group is EFL, and F3/EFL=0.52 meets 0.27≤F3/EFL≤0.9. When a temperature change is Δ°C, a change of EFL is ΔEFL, where ΔEFL/Δ°C is defined as a temperature drift coefficient of the lens group, and the temperature drift coefficient meets the following condition: -1 μm/°C≤ΔEFL/Δ°C≤1 μm/°C. A temperature drift coefficient of an image capture optical system in which the lens group is used is reduced by using a material with a low refractive index temperature coefficient and by properly allocating focal power.

In this embodiment, the focal length EFL of the lens group, a curvature radius R21 of the object side surface of the second lens, and a curvature radius R22 of the image side surface of the second lens meet the following condition: |EFL/R21|+|EFL/R22|=4.03. This helps correct system aberration.

Table 4, Table 5, and Table 6 provide detailed structure data of the lens group in the embodiment corresponding to FIG. 4. Units of the curvature radius, the thickness, and the focal length are millimeters (mm), and the surfaces ST1 to S13 sequentially represent surfaces of all optical elements from the object side to the image side. Table 5 provides aspherical surface data of each lens in the embodiment corresponding to FIG. 4, where k is a conic coefficient in an aspherical surface curve equation, and A4 to A20 represent fourth to twentieth orders of aspherical surface coefficients of each surface. Table 6 provides all parameters of the lens group in the embodiment corresponding to FIG. 4.

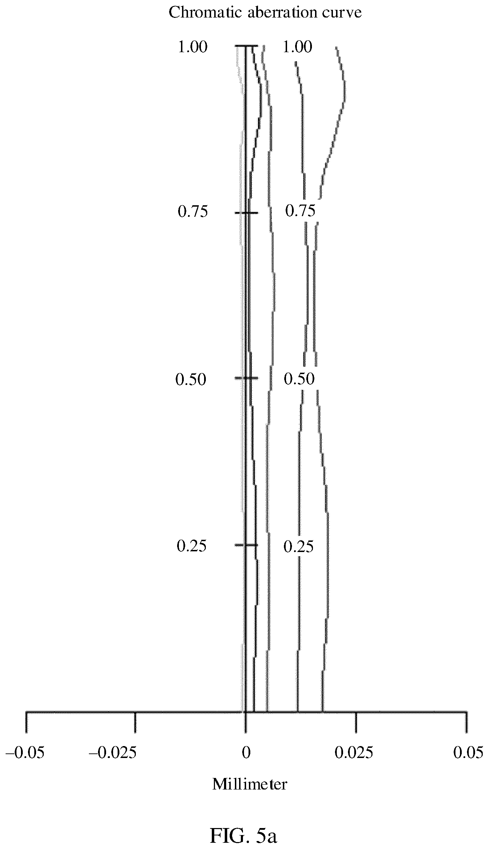

FIG. 5a shows a chromatic aberration curve of the lens group corresponding to FIG. 4. In FIG. 5a, a horizontal coordinate is a point at which light incident at different angles from a same object point intersects with the optical axis, and a vertical coordinate is a normalized height of incident light at an entrance pupil. In FIG. 5a, curves correspond to different wavelengths, such as 470 nanometers, 510 nanometers, 555 nanometers, 610 nanometers, and 650 nanometers. It may be learned from FIG. 5a that chromatic aberration is controlled within a small range (±0.025 millimeters). This may prove that the lens group proposed in this application has good chromatic aberration performance.

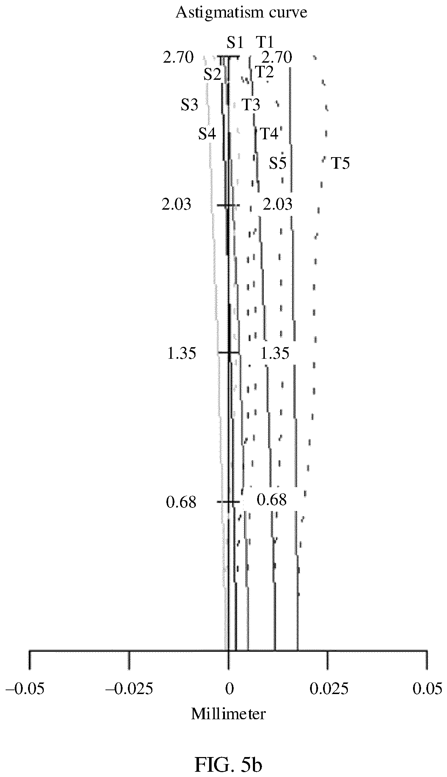

FIG. 5b shows an astigmatism/field curvature curve of the lens group corresponding to FIG. 4. In FIG. 5b, a horizontal coordinate is in a unit of millimeter, and a vertical coordinate is an image height (field of view). In FIG. 5b, solid-line curves respectively correspond to astigmatism/field curvature curves of the lens group in an S direction at wavelengths of 470 nanometers, 510 nanometers, 555 nanometers, 610 nanometers, and 650 nanometers, and dashed-line curves respectively correspond to astigmatism/field curvature curves of the lens group in a T direction at wavelengths of 470 nanometers, 510 nanometers, 555 nanometers, 610 nanometers, and 650 nanometers. It may be learned from FIG. 5b that astigmatism is controlled within a small range (±0.025 millimeters). This may prove that the lens group proposed in this application has good astigmatism performance.

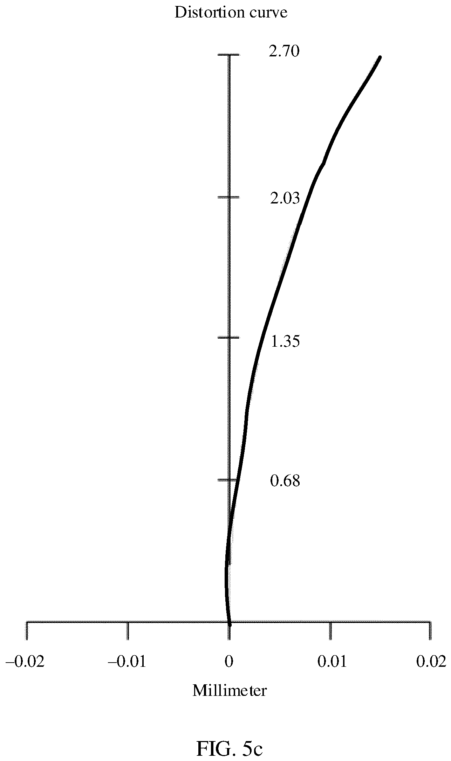

FIG. 5c shows a distortion curve of the lens group corresponding to FIG. 4. In FIG. 5c, a horizontal coordinate represents distortion (which may be a ratio of an actual image height on an image plane to an ideal image height, and is a percentage), and a vertical coordinate represents an image height. It may be learned from FIG. 5c that optical distortion is controlled within a range of 0 to 1%. The lens group corresponding to FIG. 4 has good anti-distortion performance.

It may be learned from FIG. 5a to FIG. 5c that, chromatic aberration performance, astigmatism performance, and anti-distortion performance of the lens group corresponding to FIG. 4 meet an imaging requirement, so that good imaging quality can be ensured.

In this embodiment of this application, the lens group includes the first lens L1, the second lens L2, the third lens L3, the aperture stop STO, the fourth lens L4, the fifth lens L5, and the infrared cut-off filter IRCF that are sequentially arranged along the optical axis from the object side to the image side, and the electronic photosensitive element may be placed behind the image side of the fifth lens. The third lens L3 is of the glass material, and the relative refractive index temperature coefficient thereof meets [$-9 \times 10^{-5}$, $9 \times 10^{-5}$]. In this way, the lens group has a low temperature effect. In addition, chromatic aberration performance, astigmatism performance, and anti-distortion performance of the lens group meet the imaging requirement, so that good imaging quality can be ensured.

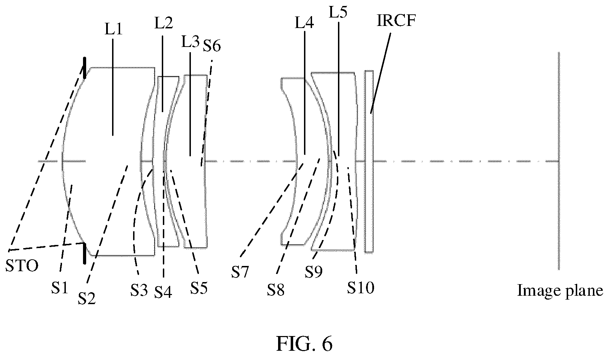

FIG. 6 is a schematic diagram of a structure of another lens group according to an embodiment of this application. As shown in FIG. 6, the lens group includes an aperture stop STO, a first lens L1, a second lens L2, a third lens L3, a fourth lens L4, a fifth lens L5, and an infrared cut-off filter IRCF that are sequentially arranged along an optical axis from an object side to an image side, and an electronic photosensitive element may be placed on an image plane.

The first lens L1 has positive focal power, and is of a resin material. An object side surface S1 thereof near the optical axis is a convex surface, an image side surface S2 thereof near the optical axis is a concave surface, and both surfaces are aspherical surfaces.

The second lens L2 has negative focal power, and is of a resin material. An object side surface S3 thereof near the optical axis is a convex surface, an image side surface S4 thereof near the optical axis is a concave surface, and both surfaces are aspherical surfaces.

The third lens L3 has positive focal power, and is of a glass material. An object side surface S5 thereof near the optical axis is a convex surface, an image side surface S6 thereof near the optical axis is a convex surface, and both surfaces aspherical surfaces. A relative refractive index temperature coefficient thereof meets [$-9 \times 10^{-5}$, $9 \times 10^{-5}$].

The fourth lens L4 has positive focal power, and is of a resin material. An object side surface S7 thereof near the optical axis is a concave surface, an image side surface S8 thereof near the optical axis is a convex surface, and both surfaces are aspherical surfaces.

The fifth lens L5 has negative focal power, and is of a resin material. An object side surface S13 thereof near the optical axis is a concave surface, an image side surface S14 thereof near the optical axis is a concave surface, and both surfaces are aspherical surfaces.

Table 7 provides specific parameters of each lens, and Table 8 provides a conic coefficient k and an aspherical surface coefficient Ai (i=4, 6, 8, 10, 12, 14, 16, 18, and 20) of a surface of each lens.

**Table 7**

| Surface number | Description | Surface type | Curvature radius | Thickness | Material | Refractive index | Dispersion coefficient |
|---|---|---|---|---|---|---|---|
| OBJ | | Planar surface | Infinite | Infinite | | | |
| STO | Aperture stop | Aspherical surface | Infinite | -0.583 | | | |
| S1 | First lens | Aspherical surface | 3.886792 | 2.100 | PLASTIC | 1.544 | 56 |
| S2 | | Aspherical surface | 6.311080 | 0.301 | | | |
| S3 | Second lens | Aspherical surface | 12.895409 | 0.300 | PLASTIC | 1.66 | 20.4 |
| S4 | | Aspherical surface | 4.994277 | 0.120 | | | |
| S5 | Third lens | Aspherical surface | 5.080286 | 1.254 | GLASS | 1.52 | 64.1 |

(continued)

| Surface number | Description | Surface type | Curvature radius | Thickness | Material | Refractive index | Dispersion coefficient |
|---|---|---|---|---|---|---|---|
| S6 | | Aspherical surface | -16.944338 | 2.140 | | | |
| S7 | Fourth lens | Aspherical surface | -6.797998 | 0.850 | PLASTIC | 1.66 | 20.4 |
| S8 | | Aspherical surface | -4.307138 | 0.100 | | | |
| S9 | Fifth lens | Aspherical surface | -11.126564 | 0.650 | PLASTIC | 1.544 | 56 |
| S10 | | Aspherical surface | 5.127978 | 0.258 | | | |
| S11 | Infrared cut-off filter | Planar surface | | 0.210 | - | 1.52 | 64.2 |
| S12 | | Planar surface | Infinite | 5.000 | | | |
| S13 | | Planar surface | Infinite | | | | |

**Table 8**

| Surface number | K | A4 | A6 | A8 | A10 |
|---|---|---|---|---|---|
| S1 | -3.13697E-01 | 4.15951E-04 | -1.54454E-04 | 3.29403E-05 | -6.44789E-06 |
| S2 | -1.70744E+01 | 1.30006E-02 | -3.75490E-03 | 8.07084E-04 | -1.47605E-04 |
| S3 | -7.90193E+01 | -5.62170E-03 | 2.17448E-03 | -4.40634E-04 | 2.81502E-05 |
| S4 | -1.85496E+00 | -8.89666E-03 | 2.02010E-03 | -1.04418E-05 | -8.72707E-05 |
| S5 | 2.81022E+00 | 4.79389E-03 | -6.43603E-03 | 1.56228E-03 | -3.74589E-04 |
| S6 | 4.82745E+01 | 4.05588E-03 | -3.78338E-03 | 3.18547E-04 | -3.77117E-05 |
| S7 | -4.18556E+01 | -4.73412E-03 | -9.51575E-03 | 2.08716E-03 | -8.91864E-04 |
| S8 | -1.88823E+01 | -1.84720E-02 | -3.34689E-03 | 1.42039E-03 | -3.03952E-04 |
| S9 | 3.15528E+01 | -6.76522E-02 | 1.98642E-02 | -1.76778E-03 | -2.13791E-04 |
| S10 | -3.62150E+01 | -3.82288E-02 | 1.52770E-02 | -3.72175E-03 | 5.06837E-04 |
| Surface number | A12 | A14 | A16 | A18 | A20 |
| S1 | 6.56791E-07 | | | | |
| S2 | 1.50389E-05 | | | | |
| S3 | -2.73030E-06 | | | | |
| S4 | 8.06004E-06 | | | | |
| S5 | 3.46669E-05 | | | | |
| S6 | 5.30075E-06 | | | | |
| S7 | 1.68599E-04 | | | | |
| S8 | 2.14123E-05 | | | | |
| S9 | 3.07644E-05 | | | | |

(continued)

| Surface number | K | A4 | A6 | A8 | A10 |
|---|---|---|---|---|---|
| S10 | -3.25778E-05 | | | | |

Table 9

| Parameter (mm) | TTL | ImgH | EFL | F1 | F2 | F3 | F4 | F5 |
|---|---|---|---|---|---|---|---|---|
| Value | 12.7 | 2.5 | 14.46 | 14.2 | -12.4 | 7.7 | 15.5 | -6.3 |

In Table 9, a maximum image height of the lens group is ImgH, a focal length of the first lens L1 is F1, a focal length of the second lens L2 is F2, a focal length of the third lens L3 is F3, a focal length of the fourth lens L4 is F4, and a focal length of the fifth lens L5 is F5.

In this embodiment, the focal length of the third lens L3 is F3, a focal length of the lens group is EFL, and F3/EFL=0.53 meets $0.27 \leq F3/EFL \leq 0.9$. When a temperature change is $\Delta°C$, a change of EFL is $\Delta EFL$, where $\Delta EFL/\Delta°C$ is defined as a temperature drift coefficient of the lens group, and the temperature drift coefficient meets the following condition: $-1 \mu m/°C \leq \Delta EFL/\Delta°C \leq 1 \mu m/°C$. A temperature drift coefficient of an image capture optical system in which the lens group is used is reduced by using a material with a low refractive index temperature coefficient and by properly allocating focal power.

In this embodiment, the focal length EFL of the lens group, a curvature radius R21 of the object side surface of the second lens, and a curvature radius R22 of the image side surface of the second lens meet the following condition: |EFL/R21|+|EFL/R22|=4.02. This helps correct system aberration.

Table 7, Table 8, and Table 9 provide detailed structure data of the lens group in the embodiment corresponding to FIG. 6. Units of the curvature radius, the thickness, and the focal length are millimeters (mm), and the surfaces ST1 to S13 sequentially represent surfaces of all optical elements from the object side to the image side. Table 8 provides aspherical surface data of each lens in the embodiment corresponding to FIG. 6, where k is a conic coefficient in an aspherical surface curve equation, and A4 to A20 represent fourth to twentieth orders of aspherical surface coefficients of each surface. Table 9 provides all parameters of the lens group in the embodiment corresponding to FIG. 6.

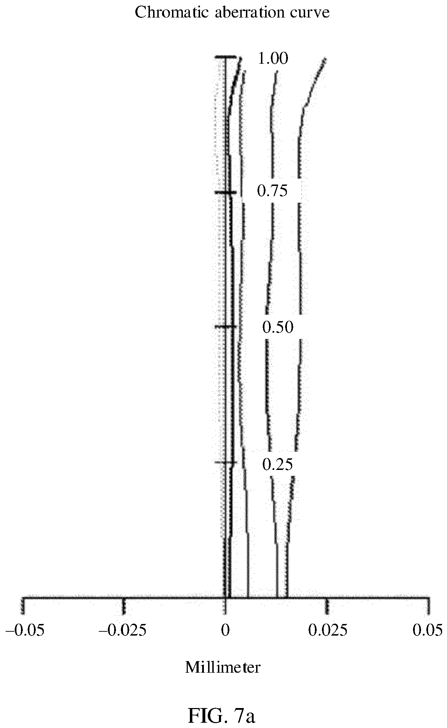

FIG. 7a shows a chromatic aberration curve of the lens group corresponding to FIG. 6. In FIG. 7a, a horizontal coordinate is a point at which light incident at different angles from a same object point intersects with the optical axis, and a vertical coordinate is a normalized height of incident light at an entrance pupil. In FIG. 7a, curves correspond to different wavelengths, such as 470 nanometers, 510 nanometers, 555 nanometers, 610 nanometers, and 650 nanometers. It may be learned from FIG. 7a that chromatic aberration is controlled within a small range ($\pm 0.025$ millimeters). This may prove that the lens group proposed in this application has good chromatic aberration performance.

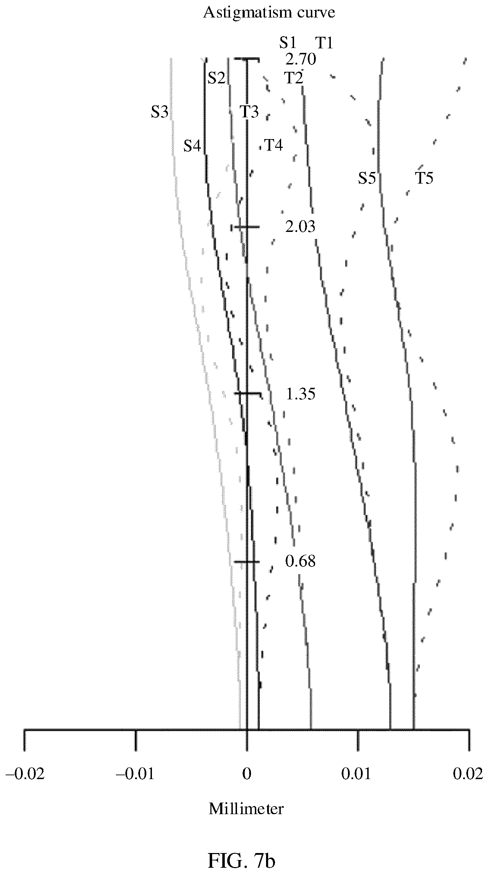

FIG. 7b shows an astigmatism/field curvature curve of the lens group corresponding to FIG. 6. In FIG. 7b, a horizontal coordinate is in a unit of millimeter, and a vertical coordinate is an image height (field of view). In FIG. 7b, solid-line curves respectively correspond to astigmatism/field curvature curves of the lens group in an S direction at wavelengths of 470 nanometers, 510 nanometers, 555 nanometers, 610 nanometers, and 650 nanometers, and dashed-line curves respectively correspond to astigmatism/field curvature curves of the lens group in a T direction at wavelengths of 470 nanometers, 510 nanometers, 555 nanometers, 610 nanometers, and 650 nanometers. It may be learned from FIG. 7b that astigmatism is controlled within a small range ($\pm 0.02$ millimeters). This may prove that the lens group proposed in this application has good astigmatism performance.

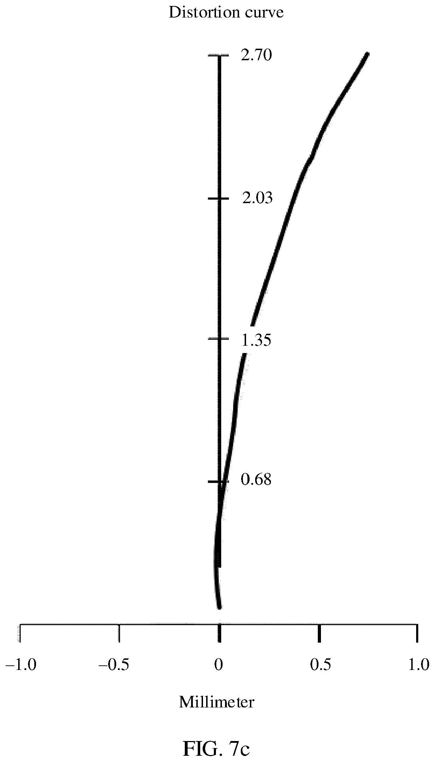

FIG. 7c shows a distortion curve of the lens group corresponding to FIG. 6. In FIG. 7c, a horizontal coordinate represents distortion (which may be a ratio of an actual image height on an image plane to an ideal image height, and is a percentage), and a vertical coordinate represents an image height. It may be learned from FIG. 7c that optical distortion is controlled within a range of 0 to 1%. The lens group corresponding to FIG. 6 has good anti-distortion performance.

It may be learned from FIG. 7a to FIG. 7c that, chromatic aberration performance, astigmatism performance, and anti-distortion performance of the lens group corresponding to FIG. 6 meet an imaging requirement, so that good imaging quality can be ensured.

In this embodiment of this application, the lens group includes the first lens L1, the second lens L2, the third lens L3, the aperture stop STO, the fourth lens L4, the fifth lens L5, and the infrared cut-off filter IRCF that are sequentially arranged along the optical axis from the object side to the image side, and the electronic photosensitive element may be placed behind the image side of the fifth lens. The third lens L3 is of the glass material, and the relative refractive index temperature coefficient thereof meets $[-9 \times 10^{-5}, 9 \times 10^{-5}]$. In this way, the lens group has a low temperature effect. In addition, chromatic aberration performance, astigmatism performance, and anti-distortion performance of the lens group meet the imaging requirement, so that good imaging quality can be ensured.

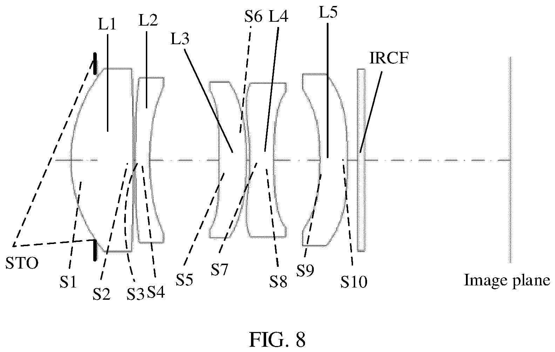

FIG. 8 is a schematic diagram of a structure of another lens group according to an embodiment of this application. As shown in FIG. 8, the lens group includes an aperture stop STO, a first lens L1, a second lens L2, a third lens L3, a fourth lens L4, a fifth lens L5, and an infrared cut-off filter IRCF that are sequentially arranged along an optical axis from an object side to an image side, and an electronic photosensitive element may be placed on an image plane.

The first lens L1 has positive focal power, and is of a resin material. An object side surface S1 thereof near the optical axis is a convex surface, an image side surface S2 thereof near the optical axis is a convex surface, and both surfaces are aspherical surfaces.

The second lens L2 has negative focal power, and is of a resin material. An object side surface S3 thereof near the optical axis is a concave surface, an image side surface S4 thereof near the optical axis is a concave surface, and both surfaces are aspherical surfaces.

The third lens L3 has positive focal power, and is of a glass material. An object side surface S5 thereof near the optical axis is a concave surface, an image side surface S6 thereof near the optical axis is a convex surface, and both surfaces aspherical surfaces. A relative refractive index temperature coefficient thereof meets $[-9 \times 10^{-5}, 9 \times 10^{-5}]$.

The fourth lens L4 has negative focal power, and is of a resin material. An object side surface S7 thereof near the optical axis is a concave surface, an image side surface S8 thereof near the optical axis is a concave surface, and both surfaces are aspherical surfaces.

The fifth lens L5 has negative focal power, and is of a resin material. An object side surface S13 thereof near the optical axis is a concave surface, an image side surface S14 thereof near the optical axis is a convex surface, and both surfaces are aspherical surfaces.

Table 10 provides specific parameters of each lens, and Table 11 provides a conic coefficient k and an aspherical surface coefficient Ai (i=4, 6, 8, 10, 12, 14, 16, 18, and 20) of a surface of each lens.

**Table 10**

| Surface number | Description | Surface type | Curvature radius | Thickness | Material | Refractive index | Dispersion coefficient |
|---|---|---|---|---|---|---|---|
| OBJ | | Planar surface | Infinite | Infinite | | | |
| STO | Aperture stop | Aspherical surface | Infinite | -0.755 | | | |
| S1 | First lens | Aspherical surface | 3.283680 | 1.813 | PLASTIC | 1.544 | 56 |
| S2 | | Aspherical surface | -51.762036 | 0.060 | | | |
| S3 | Second lens | Aspherical surface | -535.229306 | 0.400 | PLASTIC | 1.66 | 20.4 |
| S4 | | Aspherical surface | 6.442042 | 2.000 | | | |
| S5 | Third lens | Aspherical surface | -183.937840 | 0.800 | GLASS | 1.76 | 27.5 |
| S6 | | Aspherical surface | -7.612929 | 0.100 | | | |
| S7 | Fourth lens | Aspherical surface | -6.225445 | 0.700 | PLASTIC | 1.544 | 56 |
| S8 | | Aspherical surface | 12.165056 | 1.317 | | | |
| S9 | Fifth lens | Aspherical surface | -9.885067 | 0.800 | PLASTIC | 1.544 | 56 |
| S10 | | Aspherical surface | -21.707043 | 0.300 | | | |

(continued)

| Surface number | Description | Surface type | Curvature radius | Thickness | Material | Refractive index | Dispersion coefficient |
|---|---|---|---|---|---|---|---|
| S11 | Infrared cut-off filter | Planar surface | | 0.210 | - | 1.52 | 64.2 |
| S12 | | Planar surface | Infinite | 4.200 | | | |
| S13 | | Planar surface | Infinite | | | | |

**Table 11**

| Surface number | K | A4 | A6 | A8 | A10 |
|---|---|---|---|---|---|
| S1 | -2.42314E-01 | 4.30710E-04 | -3.70881E-05 | -8.86768E-06 | -7.93058E-07 |
| S2 | -9.99900E+01 | | | | |
| S3 | 5.00000E+01 | 5.68764E-03 | 2.89227E-04 | -8.70673E-05 | -3.67068E-06 |
| S4 | 2.85244E+00 | 7.08247E-03 | 5.77867E-04 | 8.42268E-05 | -1.05079E-04 |
| S5 | 5.00000E+01 | -1.36213E-02 | -2.08786E-03 | -1.21020E-04 | -1.13427E-04 |
| S6 | 1.17326E+01 | -1.22861E-02 | 3.72293E-04 | 1.02203E-03 | -3.80036E-04 |
| S7 | -2.04939E+00 | 2.90141E-03 | 7.93886E-03 | -1.26197E-03 | 1.65087E-04 |
| S8 | 9.14076E+00 | 1.06882E-03 | 9.53213E-03 | -2.63250E-03 | 5.45581E-04 |
| S9 | 1.64371E+01 | -4.30973E-02 | 6.68361E-03 | -6.33322E-04 | -4.12765E-05 |
| S10 | -3.73219E+01 | -3.32581E-02 | 5.86386E-03 | -1.20598E-03 | 1.72944E-04 |
| Surface number | A12 | A14 | A16 | A18 | A20 |
| S1 | | | | | |
| S2 | | | | | |
| S3 | 9.40457E-07 | | | | |
| S4 | 1.65444E-05 | -1.69491E-06 | | | |
| S5 | 2.96031E-05 | -2.82634E-06 | | | |
| S6 | 4.98608E-05 | | | | |
| S7 | -1.70216E-05 | | | | |
| S8 | | | | | |
| S9 | 3.59336E-05 | | | | |
| S10 | -1.39307E-05 | 1.81530E-07 | | | |

**Table 12**

| Parameter (mm) | TTL | ImgH | EFL | F1 | F2 | F3 | F4 | F5 |
|---|---|---|---|---|---|---|---|---|
| Value | 12.7 | 2.5 | 14.46 | 5.7 | -9.5 | 10.4 | -7.4 | -34.1 |

In Table 12, a maximum image height of the lens group is ImgH, a focal length of the first lens L1 is F1, a focal length of the second lens L2 is F2, a focal length of the third lens L3 is F3, a focal length of the fourth lens L4 is F4, and a focal length of the fifth lens L5 is F5.

In this embodiment, the focal length of the third lens L3 is F3, a focal length of the lens group is EFL, and F3/EFL=0.72 meets 0.27≤F3/EFL≤0.9. When a temperature change is Δ°C, a change of EFL is ΔEFL, where ΔEFL/Δ°C is defined as a temperature drift coefficient of the lens group, and the temperature drift coefficient meets the following condition: -2.6 μm/°C≤ΔEFL/Δ°C≤2.6 μm/°C. A temperature drift coefficient of an image capture optical system in which the lens group is used is reduced by using a material with a low refractive index temperature coefficient and by properly allocating focal power.

In this embodiment, the focal length EFL of the lens group, a curvature radius R21 of the object side surface of the second lens, and a curvature radius R22 of the image side surface of the second lens meet the following condition: |EFL/R21|+|EFL/R22|=2.22. This helps correct system aberration.

Table 10, Table 11, and Table 12 provide detailed structure data of the lens group in the embodiment corresponding to FIG. 8. Units of the curvature radius, the thickness, and the focal length are millimeters (mm), and the surfaces ST1 to S13 sequentially represent surfaces of all optical elements from the object side to the image side. Table 11 provides aspherical surface data of each lens in the embodiment corresponding to FIG. 8, where k is a conic coefficient in an aspherical surface curve equation, and A4 to A20 represent fourth to twentieth orders of aspherical surface coefficients of each surface. Table 12 provides all parameters of the lens group in the embodiment corresponding to FIG. 8.

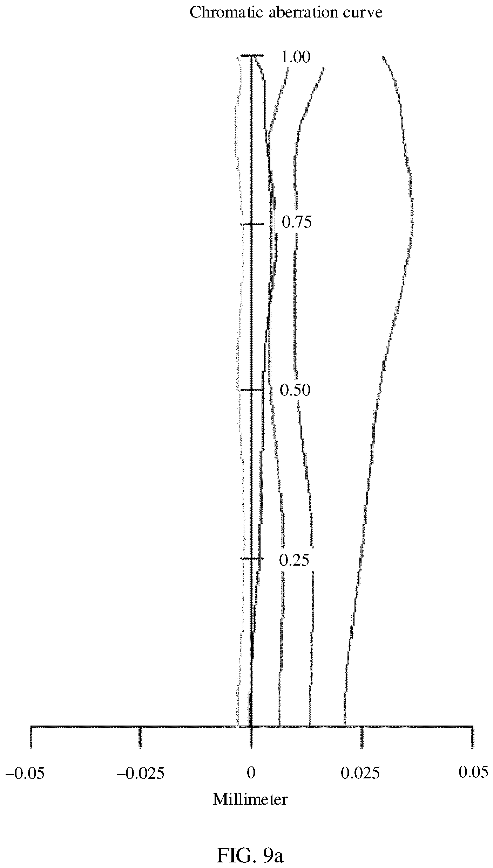

FIG. 9a shows a chromatic aberration curve of the lens group corresponding to FIG. 8. In FIG. 9a, a horizontal coordinate is a point at which light incident at different angles from a same object point intersects with the optical axis, and a vertical coordinate is a normalized height of incident light at an entrance pupil. In FIG. 9a, curves correspond to different wavelengths, such as 470 nanometers, 510 nanometers, 555 nanometers, 610 nanometers, and 650 nanometers. It may be learned from FIG. 9a that chromatic aberration is controlled within a small range (±0.025 millimeters). This may prove that the lens group proposed in this application has good chromatic aberration performance.

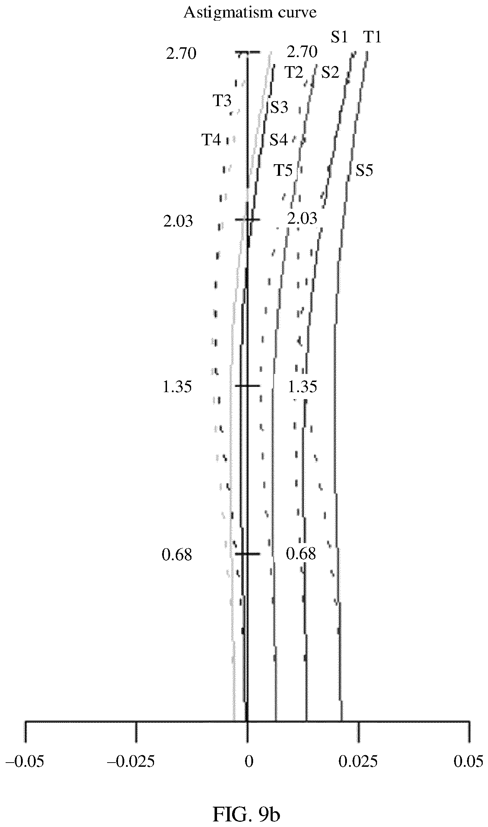

FIG. 9b shows an astigmatism/field curvature curve of the lens group corresponding to FIG. 8. In FIG. 9b, a horizontal coordinate is in a unit of millimeter, and a vertical coordinate is an image height (field of view). In FIG. 9b, solid-line curves respectively correspond to astigmatism/field curvature curves of the lens group in an S direction at wavelengths of 470 nanometers, 510 nanometers, 555 nanometers, 610 nanometers, and 650 nanometers, and dashed-line curves respectively correspond to astigmatism/field curvature curves of the lens group in a T direction at wavelengths of 470 nanometers, 510 nanometers, 555 nanometers, 610 nanometers, and 650 nanometers. It may be learned from FIG. 9b that astigmatism is controlled within a small range (±0.02 millimeters). This may prove that the lens group proposed in this application has good astigmatism performance.

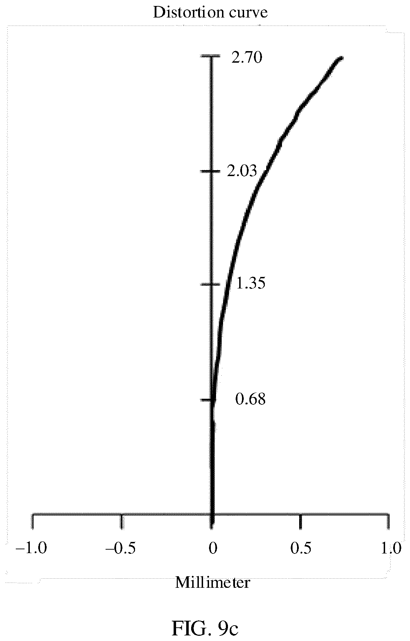

FIG. 9c shows a distortion curve of the lens group corresponding to FIG. 8. In FIG. 9c, a horizontal coordinate represents distortion (which may be a ratio of an actual image height on an image plane to an ideal image height, and is a percentage), and a vertical coordinate represents an image height. It may be learned from FIG. 9c that optical distortion is controlled within a range of 0 to 1%. The lens group corresponding to FIG. 8 has good anti-distortion performance.

It may be learned from FIG. 9a to FIG. 9c that, chromatic aberration performance, astigmatism performance, and anti-distortion performance of the lens group corresponding to FIG. 8 meet an imaging requirement, so that good imaging quality can be ensured.

In this embodiment of this application, the lens group includes the first lens L1, the second lens L2, the third lens L3, the aperture stop STO, the fourth lens L4, the fifth lens L5, and the infrared cut-off filter IRCF that are sequentially arranged along the optical axis from the object side to the image side, and the electronic photosensitive element may be placed behind the image side of the fifth lens. The third lens L3 is of the glass material, and the relative refractive index temperature coefficient thereof meets [-9×10⁻⁵, 9×10⁻⁵]. In this way, the lens group has a low temperature effect. In addition, chromatic aberration performance, astigmatism performance, and anti-distortion performance of the lens group meet the imaging requirement, so that good imaging quality can be ensured.

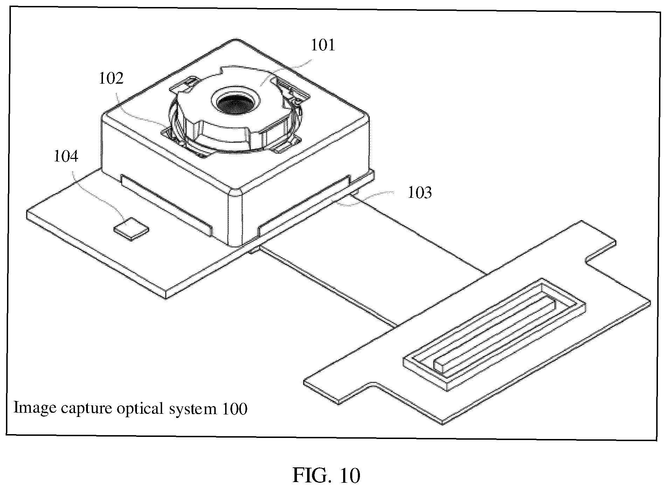

In another aspect, FIG. 10 is a schematic diagram of a structure of an image capture optical system according to an embodiment of this application. In this embodiment, the image capture optical system 100 includes an imaging lens group 101, a drive apparatus 102, a sensor 103, and an image stabilization module 104. The imaging lens group 101 includes the lens group in any one of the foregoing embodiments, a lens barrel (not marked) used to bear the lens group, and a support apparatus (Holder Member, which is not marked). The image capture optical system 100 generates an image by converging light by using the lens group 101, performs image focus through cooperation with the drive apparatus 102, and finally generates an image on the sensor 103 and can output the image as image data.

The drive apparatus 102 may have an auto-focus (auto-focus) function, and may be driven by using a drive system such as a voice coil motor (voice coil motor, VCM), micro-electro-mechanical systems (micro electro-mechanical systems, MEMS), a piezoelectric (piezoelectric) system, and a shape memory alloy (shape memory alloy). The drive apparatus 102 may enable the lens group 101 to obtain a good imaging position, so that a clear image that is of a photographed object and that can be taken in case of different object distances can be provided.

In addition, the image capture optical system 100 is equipped with the sensor 103 with a good photosensitivity and low noise, for example, a charge-coupled device (charge-coupled device, CCD) and a complementary metal-oxide-semiconductor (complementary metal-oxide-semiconductor, CMOS) photosensitive device. The sensor 103 is disposed on an image plane of the lens group, so that good imaging quality of the lens group can be actually presented.

The image stabilization module 104 is, for example, an accelerometer, a gyroscope, or a Hall element (Hall Effect Sensor). The drive apparatus 102 and the image stabilization module 104 may be jointly used as an optical image stabilization (optical image stabilization, OIS) apparatus, to adjust different axial changes of the lens group 101 to compensate for a blur image generated due to shaking at a photographing moment. Alternatively, an image compensation technology in image software is used to provide an electronic image stabilization (electronic image stabilization, EIS) function, to further improve imaging quality in dynamic and low-illuminance scene photographing.

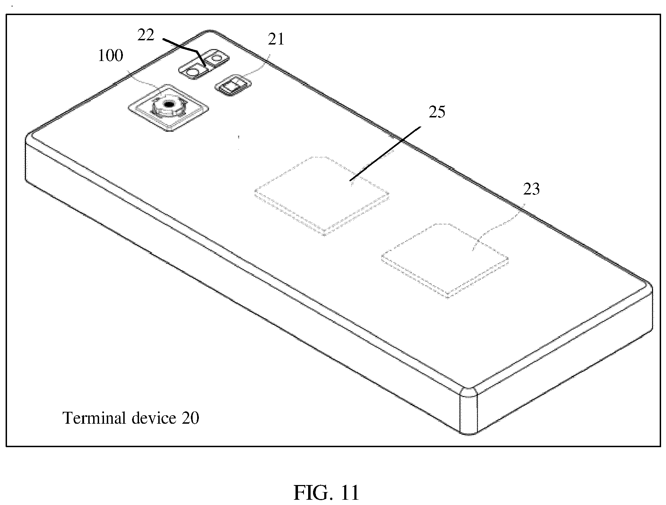

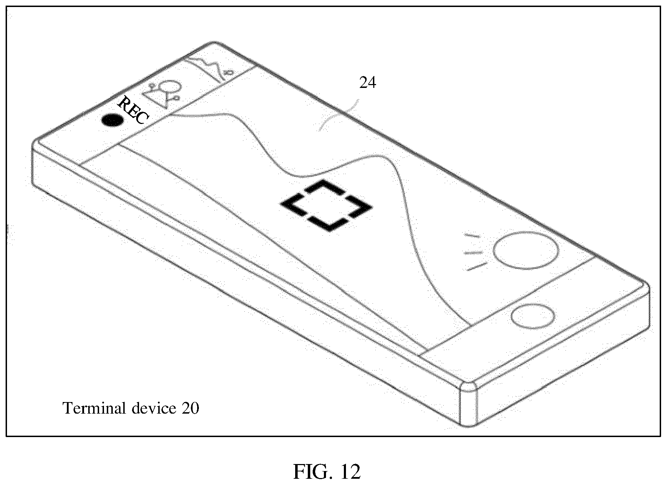

FIG. 11 is a schematic diagram of a terminal device according to an embodiment of this application. FIG. 12 is a schematic diagram of another terminal device according to an embodiment of this application. In this embodiment, a terminal device 20 is a smartphone. The terminal device 20 includes an image capture optical system 100, a flash module 21, a focus assistance module 22, an image signal processor (image signal processor) 23, a user interface 24, and an image software processor 25. An example in which the terminal device 20 includes one image capture optical system 100 is used. However, this embodiment imposes no limitation. The terminal device 20 may include a plurality of image capture optical systems 100, or may further include an image capture optical system other than the image capture optical system 100.

When a user photographs an object (photographed object) by using the user interface 24, the terminal device 20 obtains an image by converging light by using the image capture optical system 100, enables the flash module 21 to supplement light, performs fast focus by using object distance information that is of the photographed object and that is provided by the focus assistance module 22, and perform image optimization processing by using the image signal processor 23, to further improve quality of an image generated by the lens group of a camera system. The focus assistance module 22 may implement fast focus by using an infrared ray or a laser focus assistance system.

The user interface 24 may be used to perform image photographing and image processing by using a touchscreen or an entity photographing button and diversified functions of the image software processor 25.

Application of the image capture optical system 100 in the present invention is not limited to the smartphone. The image capture optical system 100 may be applied to a mobile focus system based on a requirement, and is characterized by good aberration correction performance and good imaging quality. For example, the image capture optical system 100 may be applied to a plurality of terminal devices such as three-dimensional (3D) image capture, a digital camera, a mobile apparatus, a tablet computer, a smart television, a network monitoring device, an event data recorder, a vehicle backup camera, a multi-lens apparatus, an identification system, a motion sensing game console, and a wearable apparatus. The terminal device disclosed in this embodiment is merely an example for describing an actual application example of the present invention, and does not limit an application scope of the image capture optical system in the present invention.

In the specification, claims, and accompanying drawings of this application, the terms "first", "second", and the like are intended to distinguish between similar objects but do not necessarily indicate a specific order or sequence. It should be understood that data used in such a way are interchangeable in proper cases, so that the embodiments described herein can be implemented in other orders than the order illustrated or described herein. In addition, terms "include" and "have" and any variations thereof are intended to cover non-exclusive inclusions, for example, a process, method, system, product, or device including a series of steps or modules are not necessarily limited to those clearly listed steps or modules, but may include other steps or modules that are not clearly listed or are inherent to these processes, methods, products, or devices. Naming or numbering of steps in this application does not mean that steps in the method procedure need to be performed according to a time/logical order indicated by the naming or numbering. An execution order of procedure steps that have been named or numbered may be changed based on a technical objective to be implemented, provided that a same or similar technical effect can be achieved.

It may be clearly understood by persons skilled in the art that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division in actual implementation. For example, a plurality of units or components may be combined or integrated into another system, or some features may be ignored or not performed.

In conclusion, the foregoing embodiments are merely intended to describe the technical solutions of this application, rather than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

**Claims**

1. A lens group, wherein the lens group comprises a first lens, a second lens, a third lens, a fourth lens, and a fifth lens that are sequentially arranged from an object side to an image side, and a relative refractive index temperature coefficient β of at least one lens meets: $-9 \times 10^{-5} \leq \beta \leq 9 \times 10^{-5}$.

2. The lens group according to claim 1, wherein a temperature drift coefficient of the lens group meets: -2.6 microns $\mu m/°C \leq \Delta EFL/\Delta °C \leq 2.6 \ \mu m/°C$, an effective focal length of the lens group is EFL, and $\Delta EFL/\Delta °C$ is the temperature drift coefficient.

3. The lens group according to either of claims 1 and 2, wherein a relative refractive index temperature coefficient β3 of the third lens meets: $-9 \times 10^{-5} \leq \beta 3 \leq 9 \times 10^{-5}$.

4. The lens group according to claim 3, wherein the lens group meets the following condition: $0.27 \leq F3/EFL \leq 0.9$, F3 is a focal length of the third lens, and EFL is the effective focal length of the lens group.

5. The lens group according to claim 3, wherein a dispersion coefficient V3 of the third lens meets: $15 \leq V3 \leq 100$.

6. The lens group according to claim 5, wherein the lens group meets the following condition: $SP3/LT \leq 0.5$, a distance between the third lens and the fourth lens is SP3, and a distance between a vertex position of an object side of the first lens and a vertex position of an image side of the fifth lens is LT.

7. The lens group according to any one of claims 1 to 6, wherein the first lens, the third lens, and the fourth lens have positive focal power, and the second lens and the fifth lens have negative focal power.

8. The lens group according to claim 7, wherein

    object side surfaces of the first lens, the second lens, and the third lens are convex surfaces, and image side surfaces thereof are concave surfaces;
    an object side surface of the fourth lens is a concave surface, and an image side surface thereof is a convex surface; and
    an object side surface of the fifth lens is a concave surface, and an image side surface thereof is a concave surface.

9. The lens group according to claim 8, wherein the lens group meets the following condition: $|EFL/R21|+|EFL/R22|=3.39$, the effective focal length of the lens group is EFL, a curvature radius of the object side surface of the second lens is R21, and a curvature radius of the image side surface of the second lens is R22.

10. The lens group according to claim 8, wherein the lens group meets the following condition: $|EFL/R21|+|EFL/R22|=4.03$, the effective focal length of the lens group is EFL, a curvature radius of the object side surface of the second lens is R21, and a curvature radius of the image side surface of the second lens is R22.

11. The lens group according to claim 7, wherein

    object side surfaces of the first lens and the second lens are convex surfaces, and image side surfaces thereof are concave surfaces;
    an object side surface of the third lens is a convex surface, and an image side surface thereof is a convex surface;
    an object side surface of the fourth lens is a concave surface, and an image side surface thereof is a convex surface; and
    an object side surface of the fifth lens is a concave surface, and an image side surface thereof is a concave surface.

12. The lens group according to claim 11, wherein the lens group meets the following condition: $|EFL/R21|+|EFL/R22|=4.03$, the effective focal length of the lens group is EFL, a curvature radius of the object side surface of the second lens is R21, and a curvature radius of the image side surface of the second lens is R22.

13. The lens group according to any one of claims 1 to 6, wherein the first lens and the third lens have positive focal power, and the second lens, the fourth lens, and the fifth lens have negative focal power.

**14.** The lens group according to claim 13, wherein an object side surface of the first lens is a convex surface, and an image side surface thereof is a convex surface;

> object side surfaces of the second lens and the fourth lens are concave surfaces, and image side surfaces thereof are concave surfaces; and
> object side surfaces of the third lens and the fifth lens are concave surfaces, and image side surfaces thereof are convex surfaces.

**15.** The lens group according to claim 14, wherein the lens group meets the following condition: $|EFL/R21|+|EFL/R22|=2.22$, the effective focal length of the lens group is EFL, a curvature radius of the object side surface of the second lens is R21, and a curvature radius of the image side surface of the second lens is R22.

**16.** The lens group according to claims 1 to 15, wherein the lens group meets the following condition: $TTL/EFL \leq 0.96$, a focal length of the lens group is EFL, and a total track length of the lens group is TTL.

**17.** The lens group according to any one of claims 1 to 16, wherein the lens group further comprises an aperture stop and an infrared cut-off filter IRCF; and
the aperture stop is disposed between the third lens and the fourth lens, and the infrared cut-off filter is disposed behind the image side of the fifth lens.

**18.** The lens group according to claim 17, wherein the lens group further comprises a first vignetting stop, and the first vignetting stop is disposed in front of the object side of the first lens.

**19.** The lens group according to claim 18, wherein the lens group further comprises a second vignetting stop, and the second vignetting stop is disposed behind the image side of the fifth lens.

**20.** The lens group according to any one of claims 1 to 19, wherein a material of at least one lens in the lens group comprises glass.

**21.** An image capture optical system, wherein the image capture optical system comprises the lens group according to any one of claims 1 to 20.

**22.** A terminal device, wherein the terminal device comprises the lens group according to any one of claims 1 to 20.

First lens L1   Second lens L2   Third lens L3   Fourth lens L4   Fifth lens L5

Image side

Optical
axis

Lens group

FIG. 1

FIG. 2

Chromatic aberration curve

FIG. 3a

Astigmatism curve

IMG HT

2.50

1.88

1.25

0.62

−0.02    −0.01    0    0.01    0.02

Millimeter

FIG. 3b

Distortion curve

2.50

1.88

1.25

0.62

−0.02    −0.01    0    0.01    0.02

Millimeter

FIG. 3c

FIG. 4

Chromatic aberration curve

FIG. 5a

FIG. 5b

Distortion curve

FIG. 5c

FIG. 6

Chromatic aberration curve

FIG. 7a

Astigmatism curve

FIG. 7b

Distortion curve

Millimeter

FIG. 7c

FIG. 8

Chromatic aberration curve

FIG. 9a

Astigmatism curve

FIG. 9b

Distortion curve

FIG. 9c

Image capture optical system 100

FIG. 10

FIG. 11

Terminal device 20

FIG. 12

**INTERNATIONAL SEARCH REPORT**

| | International application No. |
|---|---|
| | **PCT/CN2020/115562** |

| A. | CLASSIFICATION OF SUBJECT MATTER |
|---|---|

G02B 13/00(2006.01)i

According to International Patent Classification (IPC) or to both national classification and IPC

| B. | FIELDS SEARCHED |
|---|---|

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNKI, CNPAT, WPI, EPODOC: 相对折射率温度系数, 温度效应, 热效应, (第一 or 第1) 2d 透镜 2d 正, (第二 or 第2) 2d 透镜 2d 负, (第三 or 第3) 2d 透镜 2d 正, (第五 or 第5) 2d 透镜 2d 负, temperature, heat, (first or 1st) 2d lens 2d positive, (second or 2nd) 2d lens 2d negative, (third or 3rd) 2d lens 2d positive, (fifth or 5th) 2d lens 2d negative

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 102313970 A (LARGAN PRECISION CO., LTD.) 11 January 2012 (2012-01-11) description, paragraphs [0122]-[0146], figures 2A, 2B, 8 | 1-6, 13, 17-22 |
| Y | CN 101354476 A (SHANGHAI MICROELECTRONICS APPLIANCES CO., LTD.) 28 January 2009 (2009-01-28) description, page 3 line 2 to page 3 line 22 | 1-6, 13, 17-22 |
| A | CN 102023370 A (LARGAN PRECISION CO., LTD.) 20 April 2011 (2011-04-20) entire document | 1-22 |
| A | CN 102269861 A (LARGAN PRECISION CO., LTD.) 07 December 2011 (2011-12-07) entire document | 1-22 |
| A | CN 108254858 A (TAMRON CO., LTD.) 06 July 2018 (2018-07-06) entire document | 1-22 |
| A | US 2010076268 A1 (OLYMPUS MEDICAL SYSTEMS CORP.) 25 March 2010 (2010-03-25) entire document | 1-22 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 November 2020** | **30 November 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/115562**

| Patent document cited in search report | | | Publication date (day/month/year) | Patent family member(s) | | | Publication date (day/month/year) |
|---|---|---|---|---|---|---|---|
| CN | 102313970 | A | 11 January 2012 | CN | 102313970 | B | 23 January 2013 |
| CN | 101354476 | A | 28 January 2009 | CN | 101354476 | B | 15 June 2011 |
| CN | 102023370 | A | 20 April 2011 | CN | 102023370 | B | 23 May 2012 |
| CN | 102269861 | A | 07 December 2011 | CN | 102269861 | B | 30 January 2013 |
| CN | 108254858 | A | 06 July 2018 | JP | 2018109667 | A | 12 July 2018 |
| | | | | JP | 6692290 | B2 | 13 May 2020 |
| | | | | JP | 2020038401 | A | 12 March 2020 |
| US | 2010076268 | A1 | 25 March 2010 | JP | 2010097208 | A | 30 April 2010 |
| | | | | JP | 5558058 | B2 | 23 July 2014 |
| | | | | US | 8582218 | B2 | 12 November 2013 |
| | | | | EP | 2165640 | A1 | 24 March 2010 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910877855